Europäisches Patentamt

European Patent Office

Office européen des brevets

(19)

(11) Publication number: **0 181 065**
**B1**

(12)

# EUROPEAN PATENT SPECIFICATION

(45) Date of publication of the patent specification:
**19.04.89**

(51) Int. Cl.⁴: **B32B 27/32, B65D 65/40**

(21) Application number: **85306340.2**

(22) Date of filing: **06.09.85**

(54) A multi-layer polypropylene film structure.

(30) Priority: **28.09.84 US 655614**

(43) Date of publication of application:
**14.05.86 Bulletin 86/20**

(45) Publication of the grant of the patent:
**19.04.89 Bulletin 89/16**

(84) Designated Contracting States:
**AT BE CH DE FR GB IT LI LU NL SE**

(56) References cited:
**US-A- 4 118 438**
**US-A- 4 293 608**

(73) Proprietor: **MOBIL OIL CORPORATION, 150 East 42nd Street, New York New York 10017(US)**

(72) Inventor: **Park, Hee Chung, 3 Charing Cross, Fairport New York 14450(US)**
Inventor: **Nahmias, Alan Michael, 30 Steele Road, Victor New York 14564(US)**

(74) Representative: **Cooper, John Anthony et al, Mobil Court 3 Clements Inn, London WC2A 2EB(GB)**

ACTORUM AG

## Description

This invention relates to a multi-layer polypropylene film structure which has a low film-to-film coefficient of friction over a wide temperature range.

Polypropylene film is an excellent packaging material, but it has a high film-to-film coefficient of friction which makes it difficult to utilize in automatic packaging equipment. Moreover, when polypropylene film is used to wrap a package, such as a cigarette package, and the wrapped film is heat sealed to secure the package, there is a particular tendency for film-to-film sticking if adjacent heat seal regions contact shortly after sealing. Both of these problems present particular difficulty in automatic cigarette packaging machines, since present day machines run at from 300-400 packs per minute, which is equivalent to approximately 49m (160 ft.) of film per minute. This speed makes it very critical that the coefficient of friction of the film is very low, even after heat sealing of the film.

Certain innovations have improved the surface friction characteristics of polypropylene film. For example, U.S. Patent No. 3 176 021 discloses the inclusion of minor quantities of fatty acid amides into polypropylene film. However, in order to obtain the benefits taught by this patent, certain limitations must be observed. Thus, the film must be formed from a melt, extruded at a temperature between about 204 to 288°C (400°–550°F). In addition, the amide must be present in from 0.005 to 2.0 weight percent of the polypropylene and together with from 0.1 to 4.0 weight percent polyethylene. Under these conditions and limitations the resulting polypropylene film will have a static coefficient of friction no higher than 0.6, but this is significantly higher than the 0.25 maximum needed for successful operation in modern high speed packaging machines. Further, it has been found that once the film has been subjected to the high temperatures used to effect heat sealing, the coefficient of friction increases significantly.

U.S. Patent No. 3 399 156 discloses that the inclusion of the combination of silicone oil and finely divided silica into a polypropylene film produces a film which will have a coefficient of friction of from 0.45 to 0.46 and be suitable for use in bread-wrapping machines.

It has been found that to a certain extent high crystallinity in polypropylene impedes facile migration of additives to the surface of such a polymer in film form. This problem is addressed in U.S. Patent No. 4 419 410, which teaches the coextrusion of a skin layer of polypropylene of comparatively low stereoregularity with a core layer of polypropylene of comparatively high stereoregularity. By including in the core layer a surface modifying agent such as an amide of a fatty acid, it is found that the amide blooms to the surface of the comparatively low stereoregularity polymer to lower the coefficient of friction of the film.

In spite of these teachings, it remained until U.S. Patent No. 4 419 411 to significantly advance the art of making multi-layer polypropylene films suitable for most packaging operations. This patent teaches a multi-layer polypropylene film structure having surface modifying agents comprising finely divided silica, silicone oil and an amide of a water insoluble mono-carboxylic acid having from about 8 to about 24 carbon atoms on a surface thereof. Notwithstanding the general excellence of this film, it is found that when used in high speed cigarette pack wrapping machines, there is a tendency for the film surfaces of contacting packages to stick together, particularly in the areas where heat sealing has occurred.

It is an object of the present invention to provide a multi-layer polypropylene film structure having an extremely low coefficent of friction over a wide temperature range.

Accordingly, the present invention is directed to an oriented multi-layer polypropylene film structure comprising coextruded layers of: (a) a base layer comprising polypropylene of relatively high stereoregularity; (b) a skin layer comprising a polyolefin of relatively low stereoregularity on at least one surface of (a), said skin layer containing a surface-modifying proportion of a combination of finely divided silica, a silicone oil, and an anti-stick promoting polymer which is incompatible with said skin layer polyolefin and has a melting point exceeding that of the skin layer polyolefin by at least about 83°C (150°F).

In the multi-layer film structure of the invention, the core layer is highly crystalline or highly stereoregular polypropylene, which preferably has the following properties: a melt flow rate at 230°C (446°F) ranging from about 1 to about 25, more preferably 2 to 4, a crystalline melting point of 161 to 163°C (321–325°F), a number average molecular weight from 25,000 to 100,000, and a density from 0.90 to 0.91.

The relatively low stereoregular polyolefin polymers which can be used as the skin material of the multi-layer film include, for example, random copolymers of ethylene and propylene and ethylene-propylene-butylene terpolymers. Particularly preferred are ethylene-propylene copolymers containing from 2 to 7 wt.%, and more preferably from 3 to 5 wt.%, ethylene and having a melt flow rate at 230°C (446°F) ranging from 2 to 15, preferably 3 to 8, a crystalline melting point 125 to 150°C (257 to 302°F), a number average molecular weight range from 25,000 to 100,000, and a density from 0.89 to 0.90. These copolymers have excellent heat seal characteristics, but do not possess the excellent physical characteristics (moisture barrier, stiffness, strength, and optical properties) inherent in the polypropylene layer. Moreover, in order to take advantage of its excellent heat seal characteristics, the skin layer must be modified so as to improve its coefficient of friction particularly after being exposed to heat-seal temperatures.

The present invention is based upon the discovery that a combination of three surface modifying agents produces an unexpected improvement in the coefficient of friction of the skin layer which is substantially maintained after heat sealing of the film.

One class of surface modifying agents is finely divided silica. The silica can be any commercially available, finely divided silica, preferably that having a mean particle size ranging from 0.5 to 5 microns, and can be present in from 0.05 to 0.5 wt.%, preferably 0.1 to 0.3 wt.%, of the skin layer.

Another surface modifying agent is a silicone oil, preferably a dimethylsiloxane, having a viscosity of 20,000 to 3,000,000, preferably 20,000 to 30,000 centistokes. This siloxane can be present in from 0.3 to 0.8 wt.% of said skin layer.

The third surface modifying agent is a polymer incompatible with the skin layer polymer and having a melting point at least about 83°C (150°F) greater than that of the skin polymer. Examples of suitable polymers are polytetrafluoroethylene, nylon (e.g. nylon 6, nylon 66), polycarbonate and poly(methylpentene), with the latter being preferred. The poly(methylpentene) is a preferably a 4-methylpentene-1-based polyolefin which has a melting point of 235°C (455°F) and a density of 0.83. On melt blending poly(methylpentene) with the skin polymer, two distinct phases result. On rapid mixing, micron size particles of poly(methylpentene) are dispersed throughout the skin copolymer. The poly(methylpentene) material can be melt blended with the skin film polymer in any manner. Any additive proportion, which will promote the antistick characteristics of the finished film can be used, although it is preferred that from 1,000 to 6,000 ppm of the poly(methylpentene) or other incompatible polymer be present in the skin layer.

An optional and preferred surface modifying agent for use herein is an amide of a water-insoluble monocarboxylic acid having 8 to 24 carbon atoms and mixtures of said amides. Specific examples of this class of amides are erucamide, oleamide, stearamide and behenamide. It is preferred that this additive be included in the highly stereoregular core polypropylene in an amount of 300 to 400 ppm of the core layer and/or in the skin layer in an amount up to about 2000 p.p.m. It is to be understood that the amide may be provided in the comparatively low stereoregular copolymer skin layer of the finished film by dispersing the amide in the resin precursor of the comparatively high stereoregular polypropylene alone, the amide then exuding from the base or core film through the copolymer film to its surface. Thus, amide additive in the outer film resin starting material is not necessary, but may be desired.

By using the above surface modifying additives, it is possible to produce a multi-layer film structure in which the coefficient of friction of the surface of the or each skin layer is about 0.25 at room temperature and is maintainable at less than 0.8 up to about 132°C (270°F).

To further aid the heat seal characteristics and improve the optical properties of the film, the skin layer can also contain up to 10 wt.% of a natural or synthetic terpene resin, a wax, or a low molecular weight (e.g. 10,000) polyethylene.

The overall thickness of the multi-layer structure is composed primarily of the highly stereoregular polypropylene, core layer, which preferably comprises 93 to 98% of the overall film structure. The coextruded layer of comparatively low stereoregularity may be present on one or both surfaces of the core layer. It is preferred that the skin layer is on both sides of the core layer and that the thickness of each skin layer is from 1 to 6% of the overall film thickness. Preferably the skin layer has a thickness of 0.3–0.7 micron.

The multi-layer films of the present invention can be prepared employing commercially available systems for coextruding resins. The polypropylene homopolymer of comparatively high stereoregularity containing, if desired, amide slip agent, can be coextruded with an ethylene-propylene random copolymer of comparatively low stereoregularity containing the appropriate percentage of the combination of silica, dimethylsiloxane and incompatible polymer dispersed therein. The polymers can be brought to the molten state and coextruded from a conventional extruder through a flat sheet die, the melt streams being combined in an adapter prior to being extruded from the die. After leaving the die orifice, the multi-layer film structure is chilled and the quenched sheet then conveniently reheated and stretched, e.g., 4 to 6 times in the machine direction (MD), and subsequently, for example, 4 to 10 times in the transverse direction (TD). The edges of the film can be trimmed and the film wound onto a core. It is preferred, particularly where the film contains an amide slip agent, that the thus formed structure be conditioned or equilibrated by holding the same for a period of about 6 hours to 1 week at a temperature of 27 to 52°C (80 to 125°F), preferebly for 6 hours to 72 hours at 38 to 52°C (100° to 125°F). This film will have on the surface thereof a combination of the four additives, amide, silica, silicon oil and the incompatible polymer. The resulting film will have a coefficient of friction of 0.25 or lower and will not block under conditions of tight winding after being held at temperatures up to 60°C (140°F).

Some commercially available core polymers, skin polymers and incompatible polymers suitable for use in multi-layer structure of the invention and the melting points of these polymers are tabulated below:

Table

| Polymeric Material | Melting Point | |
|---|---|---|
| Homopolypropylene | 161–163°C | (321–325°F) |
| ARCO 9670 (ethylene-propylene random copolymer, 3 wt.% ethylene) | 140°C | (284°F) |
| ARCO W756 (ethylene-propylene random copolymer, 3.3–3.6 wt.% ethylene) | 134°C | (273°F) |
| Chisso XF 7500 (ethylene-propylene-butene-1 terpolymer, 3.5 wt.% ethylene, 4.5 wt.% butene-1) | 130°C | (266°F) |
| Chisso XF 7700 (ethylene-propylene-butene-1 terpolymer, 5 wt.% ethylene, 4.5 wt.% butene-1) | 121°C | (250°F) |
| Solvay KS 400 (ethylene-propylene random copolymer) | 134°C | (273°F) |
| Sumitomo FL 6711 (ethylene-propylene random copolymer, 4–6% ethylene) | 124°C | (255°F) |
| Polycarbonate | 124°C (518°F) (process temp.) | |
| nylon-6 | 230°C (446°F) | |
| PTFE | 327°C (621°F) | |
| poly(methylpentene) | 235°C (455°F) | |

The invention will now be described with reference to the following Examples, in which the films are tested by feeding a roll of film into a Scandia Model 712 Cigarette Pack Wrapping system with the capability of wrapping up to 200 packs of cigarettes per minute. During transport through the system each pack is subjected to three heat seal regions which can cause package to package sticking. The film must maintain a coefficient of friction at room temperature of between about 0.2–0.3 in order to avoid unacceptable drag which would lead to pack jamming and machine down-time. Success of the operation depends on the virtual absence of pack-to-pack sticking, a moderate to low force necessary to move the packs through the system and a seal range of at least 11°C (20°F) on all seal surfaces.

## EXAMPLES

### Example 1

A polypropylene homopolymer of comparatively high stereoregularity, ARCO W472, was melt coextruded with skin layers composed of a mixture of ARCO W756, an ethylene-propylene copolymer having from 3.3–3.6 wt.% ethylene, 4,000 ppm of a dimethylpoly-siloxane having a viscosity of 30,000 centistokes, 2,000 ppm silica of a mean particle size of 0.75 micron and 4,000 ppm of poly(methylpentene) having a density of 0.83 and a melting point of 235°C (455°F). Poly(methylpentene) is a product identified as TPX and is obtainable from Mitsui Petrochemical Industries Ltd., Tokyo, Japan. The resulting film had an overall thickness of 21 microns with the core layer being 19.8 microns and the skin layers being 0.6 microns each. Utilizing the above-described multi-layer film, cigarette packages, could be wrapped using the above-described apparatus at a rate of approximately 172 packs per minute. This wrapping was successfully accomplished with a virtual absence of package-to-package sticking, and with a moderate to low force being necessary to move the packages through the machine system. The temperature range for all seal surfaces was at least 20°C.

### Example 2

Example 1 was repeated except the base layer contained 400 parts per million erucamide slip agent and the skin layers contained 700 parts per million of the same.
When employed in the same cigarette package wrapping system as described above, the film showed similar behavior to that of Example 1, except that the drag force through the system was reduced by approximately 30%, from a moderate to a low level.

### Comparative Example 1

Example 1 was repeated except that the poly(methylpentene) was excluded. Employing the resulting film in the cigarette wrapping system described resulted in jamming of the system within one to two minutes due to package-to-package sticking and increased drag.

4

Example 3

Example 1 was repeated except the skin layer polymer was composed of Chisso XF 7700, a terpolymer of ethylene-propylene-butylene and the poly(methylpentene) was replaced with an equal proportion of polytetrafluoroethylene having a particle size of 5–10 microns. The resulting film, when employed in the same cigarette wrapping apparatus, exhibited the same degree of success as the film of Example 1.

Example 4

Example 1 was repeated using as the skin layer copolymer Sumitomo FL6711, which is an ethylene-propylene copolymer containing approximately 4–7 wt.% ethylene and with the poly(methylpentene) in the skin layer being replaced by 4000 ppm of subdivided polycarbonate. During preparation, the polycarbonate was melt dispersed in the ethylene-propylene copolymer to yield a dispersed phase having an average particle size of from 1–2 microns. The resulting film was employed in the same cigarette wrapping system and the same degree of success as Example 1 was experienced.

Comparative Example 2

Example 1 was repeated except the silicone oil was excluded. When the resulting film was used in the above described cigarette wrapping system, jamming occured almost immediately.

Comparative Example 3

Example 1 was repeated with poly(methylpentene) alone dispersed in the skin layer, that is with the silica and silicone oil melted, this film caused the wrapping system to jam almost immediately.

Example 5

Example 1 was repeated with nylon-6 replacing the poly(methylpentene) in an equal wt.%. Equally successful results were obtained when using the film in the above-described wrapping system.

**Claims**

1. An oriented multi-layer polypropylene film structure comprising coextruded layers of: (a) a base layer comprising polypropylene of relatively high stereoregularity; and (b) a skin layer comprising a polyolefin of relatively low stereoregularity on at least one surface of (a), said skin layer containing a combination of finely divided silica, a silicone oil and a polymer which is incompatible with said skin layer polyolefin and which has a melting point exceeding that of the skin layer polyolefin by at least 83°C (150°F).

2. The structure of claim 1 wherein said incompatible polymer is a member selected from poly(methylpentene), polycarbonate, polytetrafluoroethylene and nylon.

3. The structure of claim 1 or claim 2 wherein said skin layer is a member selected from an ethylene-propylene random copolymer and ethylene- propylene-butylene terpolymer.

4. The structure of claim 3 wherein said skin layer is an ethylene-propylene random copolymer with an ethylene content of 2 to 7 wt.%.

5. The structure of claim 4 wherein said ethylene-propylene random copolymer has an ethylene content of 3 to 5 wt.%.

6. The structure of any preceding claim wherein said incompatible polymer is present in from 1,000–6,000 ppm of said skin layer.

7. The structure of any preceding claim wherein said silicone oil is dimethylpolysiloxane having a viscosity of 20,000 to 3,000,000 centistokes.

8. The structure of claim 7 wherein said siloxane is present in from 0.3 to 0.8 wt.% of said skin layer.

9. The structure of any preceding claim wherein said silica has a mean particle size of from 0.5 to 5 microns.

10. The structure of any preceding claim wherein said silica is present from 0.05 to 0.5 wt.% of said skin layer.

11. The structure of any preceding claim also containing an amide of a water-insoluble monocarboxylic acid having from 8 to 24 carbon atoms wherein said amide is present in the precursor resin of said base layer in from 300 to 400 ppm and in said skin layer in up to 2000 ppm.

**Patentansprüche**

1. Orientierte Mehrschicht-Polypropylenfilmstruktur, gekennzeichnet durch coextrudierte Schichten aus:

a) einer Grundschicht, enthaltend Polypropylen mit einer relativ hohen Stereoregelmäßigkeit; und

b) einer Hautschicht, enthaltend ein Polyolefin mit einer relativ niedrigen Stereoregelmäßigkeit, auf

wenigstens einer Oberfläche von (a), wobei die genannte Hautschicht eine Kombination aus feinverteiltem Siliciumdioxid, einem Siliconöl und einem Polymer, das mit dem Polyolefin der genannten Hautschicht unverträglich ist und einen Schmelzpunkt aufweist, der den des Polyolefins der Hautschicht um mindestens 83°C (150°F) übersteigt, enthält.

2. Struktur nach Anspruch 1, worin das unverträgliche Polymer ein Poly-(methylpenten), Polycarbonat, Polytetrafluorethylen oder Nylon ist.

3. Struktur nach Anspruch 1 oder 2, worin die Hautschicht ein statistisches Ethylen-Propylen-Copolymer oder ein Ethylen-Propylen-Butylen-Terpolymer ist.

4. Struktur nach Anspruch 3, worin die Hautschicht ein statistisches Ethylen-Propylen-Copolymer mit einem Ethylengehalt von 2 bis 7 Gew.-% ist.

5. Struktur nach Anspruch 4, worin das statistische Ethylen-Propylen-Copolymer einen Ethylengehalt von 3 bis 5 Gew.-% aufweist.

6. Struktur nach einem der vorstehenden Ansprüche, worin das unverträgliche Polymer in einer Menge von 1000 bis 6000 ppm der Hautschicht vorliegt.

7. Struktur nach einem der vorliegenden Ansprüche, worin das Siliconöl Dimethylpolysiloxan mit einer Viskosität von 20 000 bis 3 000 000 Centistokes ist.

8. Struktur nach Anspruch 7, worin das Siloxan in einer Menge von 0,3 bis 0,8 Gew.-% der Hautschicht vorliegt.

9. Struktur nach einem der vorstehenden Ansprüche, worin das Siliciumdioxid eine mittlere Teilchengröße von 0,5 bis 5 Mikron aufweist.

10. Struktur nach einem der vorstehenden Ansprüche, worin das Siliciumdioxid in einer Menge von 0,05 bis 0,5 Gew.-% der Hautschicht vorliegt.

11. Struktur nach einem der vorstehenden Ansprüche, die auch ein Amid einer wasserunlöslichen Monocarbonsäure mit 8 bis 24 Kohlenstoffatomen enthält, wobei das Amid in dem Harzvorläufer der genannten Grundschicht in einer Menge von 300 bis 400 ppm und in der genannten Hautschicht in einer Menge von bis zu 2000 ppm vorliegt.

**Revendications**

1. Une structure en film de polypropylène à couches multiples orientée comprenant les couches coextrudées de:

(a) une couche de base comprenant du polypropylène à stéréorégularité relativement élevée; et

(b) une couche de peau comprenant une polyoléfine à stéréorégularité relativement basse sur au moins une surface de (a), ladite couche de peau contenant une combinaison de silice finement divisée, d'une huile de silicone et d'un polymère qui est incompatible avec ladite polyoléfine de la couche de peau et qui a un point de fusion supérieur à celui de la polyoléfine de la couche de peau d'une valeur d'au moins 83°C.

2. La structure selon la revendication 1, selon laquelle ledit polymère incompatible est un élément choisi parmi le poly(méthylpentène), le polycarbonate, le polytétrafluoroéthylène et le Nylon.

3. La structure selon la revendication 1 ou 2, selon laquelle ladite couche de peau est un élément choisi parmi un copolymère au hasard d'éthylène-propylène et le terpolymère d'éthylène-propylène-butylène.

4. La structure selon la revendication 3, selon laquelle ladite couche de peau est un copolymère au hasard d'éthylène-propylène avec une teneur en éthylène de 2 à 7% en poids.

5. La structure selon la revendication 4, selon laquelle ledit copolymère au hasard d'éthylène-propylène a une teneur en éthylène de 3 à 5% en poids.

6. La structure selon l'une quelconque des revendications précédentes, selon laquelle ledit polymère incompatible est présent à raison de 1 000 à 6 000 ppm de ladite couche de peau.

7. La structure selon l'une quelconque des revendications précédentes, selon laquelle ladite huile de silicone est du diméthylpolysiloxane ayant une viscosité de 20 000 à 3 000 000 centistockes.

8. La structure selon la revendication 7, selon laquelle ledit siloxane est présent à raison de 0,3 à 0,8% en poids de ladite couche de peau.

9. La structure selon l'une quelconque des revendications précédentes, selon laquelle ladite silice a une taille moyenne de particules de 0,5 à 5 µm.

10. La structure selon l'une quelconque des revendications précédentes, selon laquelle ladite silice est présente à raison de 0,05 à 0,5% en poids de ladite couche de peau.

11. La structure selon l'une quelconque des revendications précédentes contenant également un amide d'un acide monocarboxylique insoluble dans l'eau ayant de 8 à 24 atomes de carbone, selon laquelle ledit amide est présent dans la résine précurseur de ladite couche de base à raison de 300 à 400 ppm et dans ladite couche de peau en quantité atteignant 2 000 ppm.